# EUROPEAN PATENT SPECIFICATION

(11) **EP 3 869 137 B1**
(45) Date of publication and mention of the grant of the patent: **11.11.2026**
(21) Application number: 21158098.0
(22) Date of filing: 19.02.2021
(51) Int. Cl.: F24D 19/10, F28D 20/00, F24H 15/175, F24H 15/215, F24H 15/375, F24H 15/414

(54) **STORAGE TANK AND ENERGY DISTRIBUTION SYSTEM**
SPEICHERBEHÄLTER UND ENERGIEVERTEILUNGSSYSTEM
RÉSERVOIR DE STOCKAGE ET SYSTÈME DE DISTRIBUTION D'ÉNERGIE

(30) Priority: 19.02.2020 IT 202000003410
(43) Date of publication of application: 25.08.2021
(73) Proprietor: Dielle S.p.A., 04012 Cisterna di Latina (LT) (IT)
(72) Inventor: CARDONE, Daniele, 04012 CISTERNA DI LATINA (LT) (IT); CARDONE, Luca, 04012 CISTERNA DI LATINA (LT) (IT)
(74) Representative: Santi, Filippo

(56) References cited:
- EP-A1- 3 220 062
- EP-A1- 3 379 166
- WO-A1-2011/078767
- DE-A1- 102010 004 984
- FR-A1- 3 084 144
- JP-A- 2003 090 626
- US-A- 4 692 592

## Description

### Technical field of the invention

The present invention relates to a storage tank, in particular a stratified storage tank, and an optimized energy delivery system comprising the storage tank.

More specifically, the invention concerns an energy supplying system comprising a biomass generator and a stratified storage tank, optimized both from the point of view of the overall volume and from the point of view of operating efficiency.

### State of the art

In the thermal energy generators field, in particular in the biomass generator field, the use of a storage tank to be associated with the generator is known to increase the operating efficiency of the generator.

The storage tank, or puffer, acts as a thermal reservoir and is used to improve the reaction flexibility of biomass stoves, boilers or fireplaces.

The technical water contained in the tank in fact allows an accumulation of thermal energy produced by the thermal source with discontinuous operation, for example dependent on a discontinuous request for hot sanitary water or water for the traditional heating system with wall radiators (which requires high temperature water) or floor radiators (which requires water at a lower temperature than wall heating).

To optimize the efficiency of the system, the regulations also suggest the use of a certain quantity of technical water for each kW of generator power, in particular more or less equal to about 20 liters of technical water storage for each kW of power of the boiler or biomass generator. For example, for a 24 kW biomass boiler a storage tank is required containing about 500 liters of technical water, therefore having a considerable size and overall volume.

Therefore, in order to proceed with the installation of a cylindrical storage tank used in the prior art, it is necessary to use a dedicated space, for example a technical room for containing the generator, the tank and the necessary hydraulic connections.

The international patent application WO 2011/078767 A1 describes an accumulator tank configured to be connected to a heating system.

US 4 692 592 A describes a compartmentalized electric liquid heater comprising internal partitioning structures defining a plurality of interconnected subcompartments. FR 3 084 144 A1 describes a thermal installation comprising a parallelepiped reservoir with intermediate plates provided with transfer holes and external reinforcing rings. DE 10 2010 004984 A1 describes a stratified heat storage device in which heat is supplied and removed by heat exchangers arranged in the storage device. JP 2003 090626 A describes a pressurised hot-water storage tank having partition-like reinforcing members provided with through-holes. EP 3 220 062 A1 describes a thermal integrated multi-source plant comprising a first tank for technical water, a second tank for sanitary water and heat exchangers. EP 3 379 166 A1 describes a warm-water system comprising a warm-water storage device and a warm-water distribution device with valve and pump arrangements.

In the known art, it is also necessary to use skilled labor for the installation of the tank, or puffer, and for the adjustment of the connections with the generator and with the utilities.

Therefore, in addition to the disadvantages deriving from the dimensional aspects, a disadvantage of the known art is related to the costs to be incurred to install an accumulation tank.

A further disadvantage of the prior art is due to the fact that the biomass heat generator is activated at any kind of thermal request to restore the thermal conditions of the technical water accumulated in the tank, for example even when the thermal request of the utilities it is not particularly high.

### Summary of the invention

Therefore, the technical problem posed and solved by the present invention is that of providing a storage tank and a thermal energy distribution system, which allows to overcome the drawbacks mentioned above with reference to the known art.

This problem is solved by a stratified storage tank according to claim 1 and, according to the same inventive concept, by a thermal energy distribution system according to claim 11.

Preferred features of the present invention are detailed in the dependent claims.

The present invention provides some relevant advantages.

Advantageously, the feature of providing an oblong section storage tank allows to reduce the volumetric size compared to cylindrical tanks of the known type. Therefore, the system according to the invention is proposed as a compact solution for the energy management of domestic thermal power plants.

In particular, the rectangular section of a preferred embodiment of the tank according to the invention allows a shape coupling between the tank and the biomass heat generator, allowing to provide a pre-assembled, compact and easy to install system. In addition, the provision of reinforcing means ensures the contrast of the deformation forces of the side walls of the tank due to the pressure of the technical water contained inside the tank.

A further advantage is that the tank according to the invention includes thermal energy stratifying means allowing the maintenance of a stratification of a temperature gradient of the technical water stored in the tank.

A still further advantage is that the system according to the present invention allows optimal management of the thermal energy supply to the technical water of the tank, by regulating the activation of one or more heat generators connected to the tank by means of an electronic control unit, depending on the specific thermal needs required by the utilities.

Therefore, advantageously, the system according to the invention allows to maximize the efficiency of the biomass generator connected to the storage tank, extending its operating time at minimum power and reducing the number of starts and stops within an operating day.

Other advantages, characteristics and methods of use of the present invention will become evident from the following detailed description of some embodiments, presented by way of example and not of limitation.

### Brief description of the figures

Reference will be made to the figures of the attached drawings, wherein:
Figure 1 shows a front perspective view of an embodiment of the system according to the present invention;

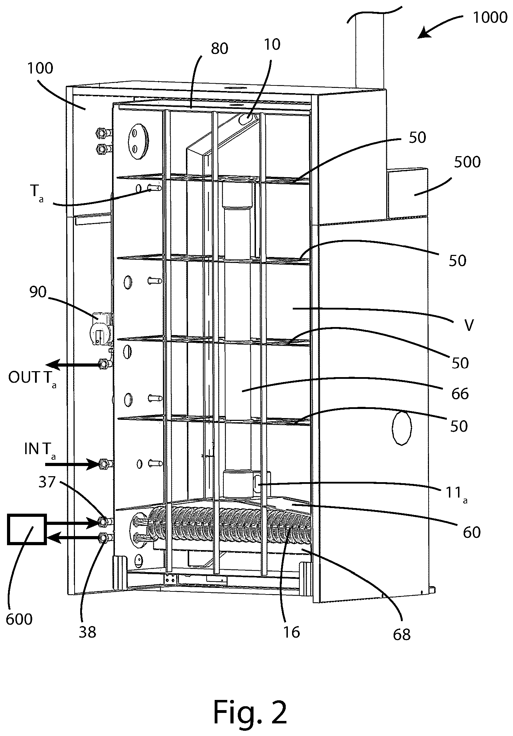

Figure 2 shows a rear perspective view in section of a first embodiment of the system according to the present invention;
Figure 3 shows a perspective view from below of the system of Figure 2;
Figure 4 shows a front section rear view of a second embodiment of the system according to the present invention, and a schematic representation of a temperature gradient inside the storage tank;
Figure 5 shows a rear perspective view in section of the system of Figure 4;
Figure 6 shows a further rear perspective view in section of the system of Figure 4.

### Detailed description of preferred embodiments

The following description will be addressed to a stratified storage tank coupable to a biomass heat generator, configured to accumulate technical water for the distribution of thermal energy to a water plant.

As shown in the figures, the tank 100; 200 according to the invention comprises a box-shaped casing 80 which defines a compartment V for containing the technical water.

The casing 80 has a delivery port 10 and a return port 11a, 11b connected or connectable to the biomass heat generator in such a way as to allow an inlet of technical water, heated by the heat generator, at an upper portion of the containment compartment V through the delivery port 10, and a return of technical water from the tank to the heat generator, at a lower portion of the containment compartment V, through the return port 11a, 11b.

Depending on the specific construction configuration, the return port 11a (in case of the single-layered storage tank 100) or 11b (in case of the double-layered storage tank 200) will be used.

Advantageously, the casing 80 has an oblong section, in such a way as to give the tank 100; 200 a more compact appearance and volumetric overall dimensions with respect to cylindrical tanks having circular section of the known type.

Preferably, the oblong section is substantially rectangular and the casing is in the shape of a parallelepiped, so as to allow the tank to be coupled to the biomass heat generator.

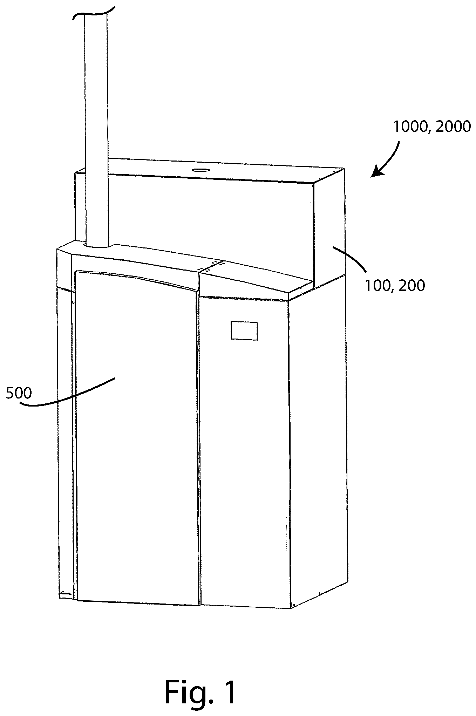

As shown in figure 1, the specific conformation of the tank 100; 200 allows a shape coupling, between the tank and the biomass boiler, in a compact and easy to install configuration.

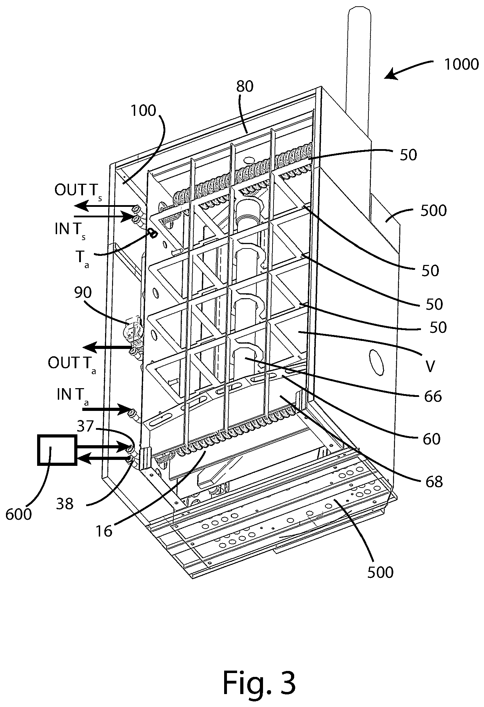

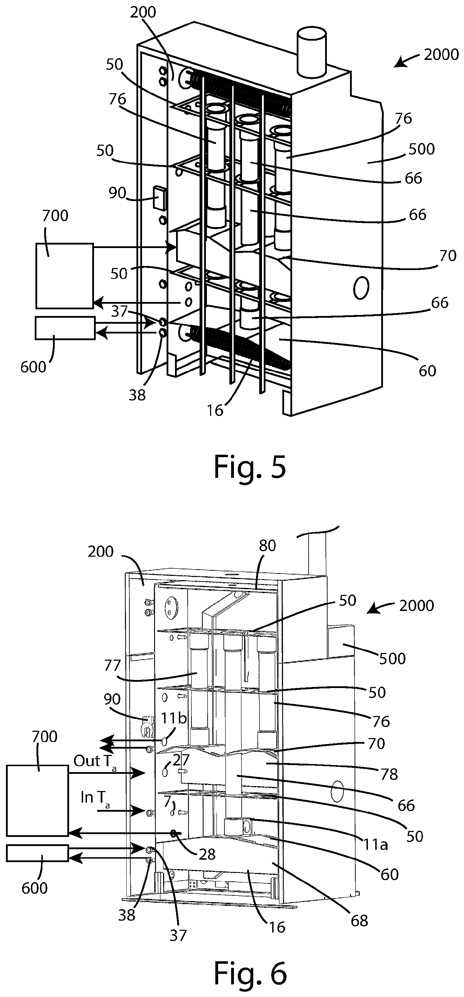

To compensate for the deformation forces on the planar walls of the casing, due to the pressure of the technical water accumulated in the box-shaped casing 80, the tank comprises reinforcing means 50. In particular, as shown in the figures, the reinforcing means 50 comprises a plurality of rod or tie elements which are connected to create substantially planar lattices, for example equally spaced, inside the tank. The reinforcing means 50 further comprises further rod or tie elements which are connected to the substantially planar lattices to maintain them in a spaced configuration. As shown in figures 3 and 5, the substantially planar lattices are kept spaced apart by the further rod elements positioned transversely with respect to the lattices, in such a way as to form a substantially three-dimensional reinforcement frame inside the tank.

In particular, the realization of the reinforcement lattices takes place during the assembly of the tank by welding in sequence, of all the necessary rod elements, to the internal walls of the casing 80.

In any case, the planar reinforcement lattices are fixed at a maximum distance of 20 cm from each other, in such a way as to ensure compensation of the forces generated by the liquid contained in the casing. The same maximum distance is preferably also maintained between rod elements positioned on the same plane.

Advantageously, the tank according to the present invention comprises thermal energy stratifying means configured to convey from one layer to the other the technical water heated in the compartment V and allow the maintenance of a stratification of a temperature gradient of the technical water accumulated in the tank. The stratifying means are shaped to allow, by means of the containment of thermal energy in a stratification volume of the tank, a heating of technical water also in lower portions of the tank and a distribution of the technical energy inside the containment compartment V such as to optimize the efficiency of the heat generator.

Therefore, the casing 80 provides at least one delivery opening obtained on a side wall at the stratifying means to allow the entrance of thermal energy into a respective stratification volume defined by the stratifying means.

In particular, as shown in the figures, the stratifying means comprises a lower lid 60 shaped as a laminar element arranged in a substantially horizontal configuration in the compartment V to separate a lower portion Pᵢ from an intermediate portion Pₘ of the compartment V.

Advantageously, the lower lid 60 comprises a conveyor 66 for conveying a heated technical water from the lower portion Pᵢ towards the upper portion Pₛ of the compartment V.

In particular, the conveyor 66 is structured as a tubular element comprising a plurality of openings on the lateral surface to allow the heated water to escape from the conveyor 66 to the compartment V at an equal density value, i.e. at an equal temperature of the technical water outside the conveyor 66.

Preferably, the lower stratification volume is sized to house a coil 16 connected or connectable to a solar plant 600.

A second embodiment of the tank 200 according to the invention also provides an intermediate cover 70 shaped as a laminar element arranged in a substantially horizontal configuration in the compartment V to separate an intermediate portion Pₘ from an upper portion Pₛ of the compartment V.

Preferably, both the lid 60 and the lid 70 are connected to two opposite walls of the casing. For example, to allow natural circulation of technical water in the tank, at least two sides of each lid are spaced from the walls of the casing 80.

In particular, the intermediate lid 70 comprises at least one conveyor 77 for conveying a heated technical water, from the intermediate portion Pₘ to an upper portion Pₛ of said compartment V.

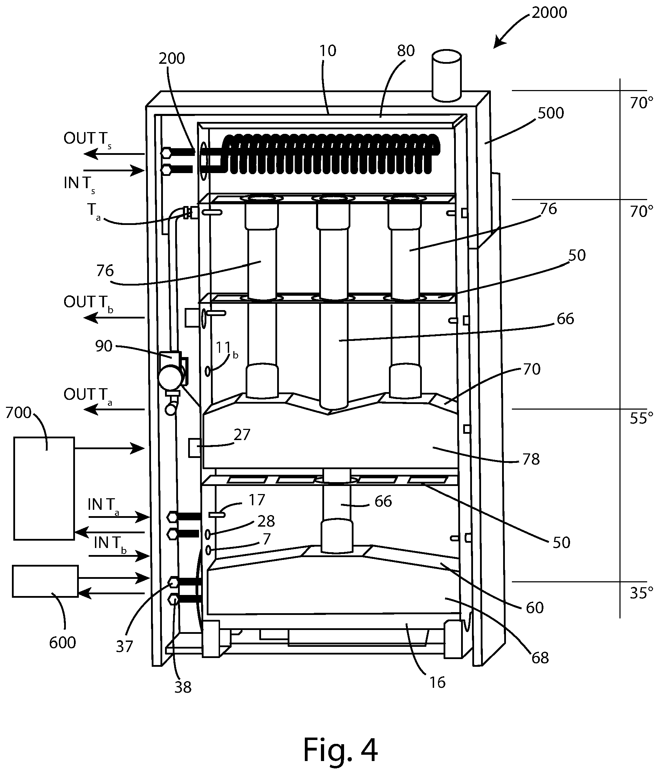

Preferably, as shown in figure 4, for a matter of structural symmetry and better distribution of thermal energy within the compartment V, the lid 70 has two tubular conveyors 77 equally spaced from the central conveyor 66. As described above with reference to the conveyor 66, the conveyors 77 also have openings on the side surface.

Preferably, to facilitate a conveyance of the fluid, each lid, as shown in the figures, has surface portions inclined towards the inlet mouth of each conveyor.

As shown in figures 4 and 5, the stratifying means also comprises at least one substantially vertical lateral dividing element 68,78, constrained to each lid 60,70 and sized to better define the stratification volume in said compartment V and to allow the heating of the technical water contained in the compartment V.

In particular, as shown in figures 4 to 6, the intermediate stratification volume is sized to house a delivery port 27 connected or connectable to an intermediate temperature heat generator, preferably to a heat pump 700.

The heat pump is powered by electricity and therefore advantageously does not produce polluting emissions.

The present invention is also directed to a thermal energy distribution system comprising a biomass heat generator and a stratified storage tank, as described above, wherein the biomass heat generator and the storage tank are shaped in a way such that they can be coupled in shape coupling.

A first embodiment of the system 1000 according to the present invention comprises a biomass generator 500, for example a pellet boiler, and a compensation tank 100 comprising a low temperature heat generator 600, optionally a solar plant.

A second embodiment of the system 2000 according to the present invention comprises a biomass generator 500, for example a pellet boiler, and a compensation tank 200 comprising a low temperature heat generator 600, optionally a solar system and a generator of heat at intermediate temperature 700, optionally a heat pump.

The system according to the invention, with integrated storage tank or puffer, allows for maximum flexibility between heat sources.

In particular, the double stratification of the tank allows each generator to work with optimal delivery and return temperatures.

As shown in figure 4, the temperature profile inside the stratified tank 200 described here provides a temperature of about 70 °C in the upper portion Pₛ of the tank dedicated to housing a coil, copper finned, for the production of sanitary water.

An intermediate portion (Pₘ) of the tank has a temperature gradient comprised between about 70 °C and about 55 °C.

A lower portion (Pᵢ) of the tank has a temperature gradient comprised between about 55 °C and about 35 °C.

In the lower portion of the tank at 35 °C, the solar thermal system works.

Therefore, thanks to the double stratification it will be possible to withdraw domestic hot water even in not particularly sunny weather conditions or exclusive use of the heat pump 700.

Furthermore, thanks to the double stratification, the heat generator 500, preferably a pellet boiler, works only in a temperature range comprised between about 75 °C and about 55 °C, thus supporting the heat pump 700 which is not convenient at high temperatures.

Therefore, even the heat pump 700 works in its own optimal temperature range allowing to reach the maximum values in terms of Coefficient of Performance (COP) and at the same time a maximum saving.

Advantageously, the system according to the invention comprises first temperature measuring means to measure a temperature inside the storage tank, arranged inside the same storage tank 100; 200, and a logical control unit (CU) connected to the first temperature measuring means and configured to acquire the value of the temperature detected by the first temperature measuring means and compare the value of the detected temperature with a predetermined temperature threshold and if the temperature value is lower than the predetermined temperature threshold, activate the biomass generator 500 and/or the intermediate temperature generator 700.

The system can therefore automatically and independently determine the need to activate or deactivate one or more generators depending on a detected internal temperature and depending on a preset threshold temperature.

The system according to the invention also comprises detecting means configured to detect one or more thermal requests of utilities connected to the storage tank. The logical control unit CU is connected to the detecting means and configured to activate/deactivate the biomass generator 500 and/or said intermediate temperature generator 700, based on one or more thermal requests detected by the detection means, in a way such as to optimize the system efficiency.

The system can therefore determine automatically and independently from the intervention of a user the need to activate or deactivate one or more generators according to the specific thermal request of the utilities, in particular in consideration of the temperature already present inside the storage tank.

Advantageously, the thermal energy distribution system according to the present invention further comprising second temperature measuring means for measuring an ambient temperature external to the storage tank 100; 200, arranged outside the tank. The logical control unit CU is connected to the second temperature measuring means and configured to acquire the ambient temperature value and to activate/deactivate the biomass generator 500 and/or the intermediate temperature generator 700, based on the acquired value in such a way as to regulate a delivery temperature towards the thermal utilities according to said acquired ambient temperature value.

The system will therefore be able to determine automatically and independently from the intervention of a user the need to activate or deactivate one or more generators depending on the specific external temperature detected, in particular in consideration of the temperature already present inside the storage tank.

For example, in unfavorable climatic conditions and particularly low ambient temperatures, in particular in the case of a peak of thermal request, the system will exclude the heat pump and only activate the pellet boiler.

In peak conditions, by setting a high heat transfer fluid delivery temperature, the generators work in combination to obtain rapid heating.

In the maintenance conditions, however, the temperature of the technical water accumulated in the tank is adjusted so as to use only the heat pump.

Advantageously, the automatic regulation of the system according to the invention allows to supply water leaving the storage tank at a temperature comprised between 40 °C and 70 °C depending on the specific thermal request of the utilities.

In particular, for heating by means of radiators, the system according to the invention allows to adjust the temperature of the delivery technical water (or heat transfer fluid) based on the detected ambient temperature and the external climatic conditions.

The great flexibility of use makes the system according to the invention extremely advantageous both in the case of systems with traditional high-temperature radiators and in the case of low-temperature radiant systems, even in the case of existing systems.

Furthermore, advantageously, in the summer season it will be possible to produce cold water for cooling the rooms using only the heat pump.

The present invention has been described for illustrative but not limitative purposes, according to a preferred embodiment thereof, but it is understood that variations and/or modifications may be made by those skilled in the art without thereby departing from the relative scope of protection, such as defined by the attached claims.

## Claims

1. Stratified storage tank (100; 200) coupable to a biomass heat generator, configured to store technical water for the distribution of thermal energy to a water system, said tank comprising:
- a box-shaped casing (80), having an oblong section, which defines a compartment (V) for containing technical water, said casing (80) having a delivery port (10) and a return port (11a; 11b) connectable to the biomass heat generator,
- reinforcing means (50) of a lateral wall of said box-shaped casing (80),
- thermal energy stratifying means (60,66,68; 70,76,78) configured to convey the heated technical water in said compartment (V) from one layer to another, allowing the maintenance of a stratification of a gradient of temperature of the technical water stored into the tank,
- at least one delivery opening obtained on a side wall at the stratifying means (60,66,68; 70,76,78) to allow the entrance of thermal energy into a stratification volume defined by said stratifying means, **characterized in that** said
reinforcing means (50) comprises a plurality of rod or tie elements, configured as a plurality of substantially planar lattices, spaced apart from each other, positioned between opposite walls of said box-shaped casing (80),
wherein, said reinforcing means (50) comprise further rod or tie elements which are connected to said substantially planar lattices to maintain them in a spaced configuration, so that said substantially planar lattices are kept spaced apart by said further rod or tie elements positioned transversely with respect to said substantially planar lattices, in such a way as to form a substantially three-dimensional reinforcement frame inside said stratified storage tank (100; 200).

2. Storage tank (100; 200) according to the preceding claim, wherein said stratifying means comprises a lower lid (60) shaped as a laminar element arranged in a substantially horizontal configuration in said compartment (V) to separate a lower portion (Pᵢ) of said compartment (V) from an intermediate portion (Pₘ) of said compartment (V).

3. Storage tank (100; 200) according to the preceding claim, wherein said lower lid (60) comprises a conveyor (66) for conveying a heated technical water from said lower portion (Pᵢ) towards an upper portion (Pₛ) of said compartment (V).

4. Storage tank (200) according to any one of the preceding claims, wherein said stratifying means comprises an intermediate lid (70) shaped as a laminar element arranged in a substantially horizontal configuration in said compartment (V) to separate an intermediate portion (Pₘ) of said compartment (V) from an upper portion (Pₛ) of said compartment (V).

5. Storage tank (200) according to the preceding claim, wherein said intermediate lid (70) comprises at least one conveyor (77) for conveying a heated technical water from said intermediate portion (Pₘ) towards an upper portion (Pₛ) of said compartment (V).

6. Storage tank (100; 200) according to any one of claims 2 to 5, wherein said lid (60; 70) has inclined surface portions to allow the fluid to be conveyed towards an inlet of said conveyor (66, 77).

7. Storage tank (100; 200) according to any one of claims 2 to 6, wherein said stratifying means comprises at least one substantially vertical lateral dividing element (68,78), constrained to said lid (60,70) sized to define a stratification volume in said compartment (V).

8. Storage tank (100; 200) according to the preceding claim, wherein said lower stratification volume is sized to house a coil (16) connectable to a solar plant (600).

9. Storage tank (200) according to any one of claims 6 or 7, wherein said intermediate stratification volume is sized to house a delivery port (27) connectable to an intermediate temperature heat generator (700), optionally a heat pump.

10. Storage tank (100; 200) according to any one of the preceding claims, wherein said oblong section is rectangular in shape.

11. Thermal energy distribution system (1000; 2000) comprising a biomass heat generator (500) and a stratified storage tank (100; 200) according to any one of claims 1 to 10, wherein said biomass heat generator (500) and said storage tank (100; 200) are shaped in such a way that they can be coupled in shape coupling.

12. Thermal energy distribution system (2000), according to the preceding claim, comprising an intermediate temperature heat generator (700), optionally a heat pump.

13. Thermal energy distribution system (1000; 2000) according to any one of claims 11 or 12 comprising a low temperature heat generator (600), optionally a solar plant.

14. Thermal energy distribution system (1000; 2000) according to any one of claims 11 to 13, comprising:
- first temperature measuring means to measure an internal temperature of said storage tank (100; 200), arranged inside said storage tank (100; 200), and
- a logical control unit (CU) connected to said first temperature measuring means and configured for
∘ acquiring the value of said temperature detected by said first temperature measuring means,
∘ comparing the value of said temperature with a predetermined temperature threshold, and
∘ if said temperature value is lower than said predetermined temperature threshold, activate said biomass generator (500) and/or said intermediate temperature generator (700).

15. Thermal energy distribution system (1000; 2000) according to the preceding claim, comprising detecting means configured to detect one or more thermal requests of utilities connected to the storage tank, wherein said logical control unit (CU) is connected to said detecting means and configured to activate/deactivate said biomass generator (500) and/or said intermediate temperature generator (700), on the basis of said one or more thermal requests detected by said detecting means, in such a way as to optimize system efficiency.

16. Thermal energy distribution system (1000; 2000) according to claim 14 or 15, comprising second temperature measuring means for measuring an ambient temperature external to said storage tank (100; 200), arranged outside said storage tank (100; 200), in which said logical control unit (CU) is connected to said second temperature measuring means and configured to acquire the value of said ambient temperature and to activate/deactivate said biomass generator (500) and/or said intermediate temperature generator (700), on the basis of said value in such a way as to regulate a delivery temperature towards the utilities according to said acquired ambient temperature value.

## Patentansprüche

1. Schichtspeichertank (100; 200), der mit einem Biomasse-Wärmeerzeuger koppelbar und dazu ausgelegt ist, technisches Wasser zur Verteilung von Wärmeenergie an ein Wassersystem zu speichern, wobei der Tank Folgendes umfasst:
- ein kastenförmiges Gehäuse (80) mit einem länglichen Querschnitt,
das einen Raum (V) zur Aufnahme von technischem Wasser definiert, wobei das Gehäuse (80) einen Vorlaufanschluss (10) und einen Rücklaufanschluss (11a; 11b) aufweist, die mit dem Biomasse-Wärmeerzeuger verbindbar sind,
- Verstärkungsmittel (50) für eine Seitenwand des kastenförmigen Gehäuses (80),
- Wärmeenergie-Schichtungsmittel (60,66,68; 70,76,78), die dazu ausgelegt sind, das erwärmte technische Wasser in dem Raum (V) von einer Schicht zu einer anderen zu leiten, wodurch die Aufrechterhaltung einer Schichtung eines Temperaturgradienten des im Tank gespeicherten technischen Wassers ermöglicht wird,
- mindestens eine an einer Seitenwand auf Höhe der Schichtungsmittel (60,66,68; 70,76,78) ausgebildete Vorlauföffnung, um den Eintritt von Wärmeenergie in ein durch die Schichtungsmittel definiertes Schichtungsvolumen zu ermöglichen, **dadurch gekennzeichnet, dass** die Verstärkungsmittel (50) eine Vielzahl von Stab- oder Zugelementen umfassen, die als eine Vielzahl im Wesentlichen ebener Gitter ausgebildet sind, voneinander beabstandet sind und zwischen gegenüberliegenden Wänden des kastenförmigen Gehäuses (80) angeordnet sind,
wobei die Verstärkungsmittel (50) ferner Stab- oder Zugelemente umfassen, die mit den im Wesentlichen ebenen Gittern verbunden sind, um diese in einer beabstandeten Anordnung zu halten, sodass die im Wesentlichen ebenen Gitter durch die weiteren, quer zu den im Wesentlichen ebenen Gittern angeordneten Stab- oder Zugelemente voneinander beabstandet gehalten werden, um innerhalb des Schichtspeichertanks (100; 200) einen im Wesentlichen dreidimensionalen Verstärkungsrahmen zu bilden.

2. Speichertank (100; 200) nach dem vorhergehenden Anspruch, wobei die Schichtungsmittel einen unteren Deckel (60) umfassen, der als lamellenförmiges Element ausgebildet und in einer im Wesentlichen horizontalen Anordnung in dem Raum (V) angeordnet ist, um einen unteren Abschnitt (Pᵢ) des Raums (V) von einem mittleren Abschnitt (Pₘ) des Raums (V) zu trennen.

3. Speichertank (100; 200) nach dem vorhergehenden Anspruch, wobei der untere Deckel (60) eine Fördereinrichtung (66) zum Fördern von erwärmtem technischem Wasser von dem unteren Abschnitt (Pᵢ) zu einem oberen Abschnitt (Pₛ) des Raums (V) umfasst.

4. Speichertank (200) nach einem der vorhergehenden Ansprüche, wobei die Schichtungsmittel einen mittleren Deckel (70) umfassen, der als lamellenförmiges Element ausgebildet und in einer im Wesentlichen horizontalen Anordnung in dem Raum (V) angeordnet ist, um einen mittleren Abschnitt (Pₘ) des Raums (V) von einem oberen Abschnitt (Pₛ) des Raums (V) zu trennen.

5. Speichertank (200) nach dem vorhergehenden Anspruch, wobei der mittlere Deckel (70) mindestens eine Fördereinrichtung (77) zum Fördern von erwärmtem technischem Wasser von dem mittleren Abschnitt (Pₘ) zu einem oberen Abschnitt (Pₛ) des Raums (V) umfasst.

6. Speichertank (100; 200) nach einem der Ansprüche 2 bis 5, wobei der Deckel (60; 70) geneigte Oberflächenabschnitte aufweist, um das Fluid zu einem Einlass der Fördereinrichtung (66, 77) zu leiten.

7. Speichertank (100; 200) nach einem der Ansprüche 2 bis 6, wobei die Schichtungsmittel mindestens ein im Wesentlichen vertikales seitliches Trennelement (68,78) umfassen, das an dem Deckel (60,70) befestigt und so bemessen ist, dass es ein Schichtungsvolumen in dem Raum (V) definiert.

8. Speichertank (100; 200) nach dem vorhergehenden Anspruch, wobei das untere Schichtungsvolumen so bemessen ist, dass es eine mit einer Solaranlage (600) verbindbare Rohrschlange (16) aufnimmt.

9. Speichertank (200) nach einem der Ansprüche 6 oder 7, wobei das mittlere Schichtungsvolumen so bemessen ist, dass es einen Vorlaufanschluss (27) aufnimmt, der mit einem Wärmeerzeuger (700) für mittlere Temperaturen, optional einer Wärmepumpe, verbindbar ist.

10. Speichertank (100; 200) nach einem der vorhergehenden Ansprüche, wobei der längliche Querschnitt rechteckig ausgebildet ist.

11. Wärmeenergie-Verteilungssystem (1000; 2000), umfassend einen Biomasse-Wärmeerzeuger (500) und einen Schichtspeichertank (100; 200) nach einem der Ansprüche 1 bis 10, wobei der Biomasse-Wärmeerzeuger (500) und der Speichertank (100; 200) so geformt sind, dass sie formschlüssig miteinander gekoppelt werden können.

12. Wärmeenergie-Verteilungssystem (2000) nach dem vorhergehenden Anspruch, umfassend einen Wärmeerzeuger (700) für mittlere Temperaturen, optional eine Wärmepumpe.

13. Wärmeenergie-Verteilungssystem (1000; 2000) nach einem der Ansprüche 11 oder 12, umfassend einen Niedertemperatur-Wärmeerzeuger (600), optional eine Solaranlage.

14. Wärmeenergie-Verteilungssystem (1000; 2000) nach einem der Ansprüche 11 bis 13, umfassend:
- erste Temperaturmessmittel zum Messen einer Innentemperatur des Speichertanks (100; 200), die innerhalb des Speichertanks (100; 200) angeordnet sind, und
- eine logische Steuereinheit (CU), die mit den ersten Temperaturmessmitteln verbunden und dazu ausgelegt ist,
∘ den Wert der von den ersten Temperaturmessmitteln erfassten Temperatur zu erfassen,
∘ den Wert der Temperatur mit einem vorgegebenen Temperaturschwellenwert zu vergleichen und
∘ den Biomasse-Wärmeerzeuger (500) und/oder den Wärmeerzeuger (700) für mittlere Temperaturen zu aktivieren, wenn der Temperaturwert unter dem vorgegebenen Temperaturschwellenwert liegt.

15. Wärmeenergie-Verteilungssystem (1000; 2000) nach dem vorhergehenden Anspruch, umfassend Erfassungsmittel, die dazu ausgelegt sind, eine oder mehrere Wärmeanforderungen von an den Speichertank angeschlossenen Verbrauchern zu erfassen, wobei die logische Steuereinheit (CU) mit den Erfassungsmitteln verbunden und dazu ausgelegt ist, den Biomasse-Wärmeerzeuger (500) und/oder den Wärmeerzeuger (700) für mittlere Temperaturen auf Grundlage der von den Erfassungsmitteln erfassten einen oder mehreren Wärmeanforderungen zu aktivieren/deaktivieren, um die Systemeffizienz zu optimieren.

16. Wärmeenergie-Verteilungssystem (1000; 2000) nach Anspruch 14 oder 15, umfassend zweite Temperaturmessmittel zum Messen einer Umgebungstemperatur außerhalb des Speichertanks (100; 200), die außerhalb des Speichertanks (100; 200) angeordnet sind, wobei die logische Steuereinheit (CU) mit den zweiten Temperaturmessmitteln verbunden und dazu ausgelegt ist, den Wert der Umgebungstemperatur zu erfassen und den Biomasse-Wärmeerzeuger (500) und/oder den Wärmeerzeuger (700) für mittlere Temperaturen auf Grundlage dieses Werts zu aktivieren/deaktivieren, um eine Vorlauftemperatur zu den Verbrauchern entsprechend dem erfassten Umgebungstemperaturwert zu regeln.

## Revendications

1. Réservoir de stockage stratifié (100; 200) pouvant être raccordé à un générateur de chaleur à biomasse, configuré pour stocker de l'eau technique destinée à la distribution d'énergie thermique à un réseau d'eau, ledit réservoir comprenant:
- une enveloppe en forme de caisson (80), présentant une section oblongue,
qui définit un compartiment (V) destiné à contenir de l'eau technique, ladite enveloppe (80) présentant un orifice de départ (10) et un orifice de retour (11a; 11b) pouvant être raccordés au générateur de chaleur à biomasse,
- des moyens de renforcement (50) d'une paroi latérale de ladite enveloppe en forme de caisson (80),
- des moyens de stratification de l'énergie thermique (60, 66, 68; 70, 76, 78) configurés pour faire passer l'eau technique chauffée dans ledit compartiment (V) d'une couche à une autre, permettant de maintenir une stratification d'un gradient de température de l'eau technique stockée dans le réservoir,
- au moins une ouverture de départ ménagée dans une paroi latérale au niveau des moyens de stratification (60, 66, 68; 70, 76, 78), pour permettre l'entrée d'énergie thermique dans un volume de stratification défini par lesdits moyens de stratification, **caractérisé en ce que** lesdits moyens de renforcement (50) comprennent une pluralité d'éléments en forme de tiges ou de tirants, configurés sous la forme d'une pluralité de treillis sensiblement plans, espacés les uns des autres, positionnés entre des parois opposées de ladite enveloppe en forme de caisson (80), lesdits moyens de renforcement (50) comprenant en outre d'autres éléments en forme de tiges ou de tirants qui sont reliés auxdits treillis sensiblement plans pour les maintenir dans une configuration espacée, de sorte que lesdits treillis sensiblement plans soient maintenus espacés par lesdits autres éléments en forme de tiges ou de tirants disposés transversalement par rapport auxdits treillis sensiblement plans, de manière à former un cadre de renforcement sensiblement tridimensionnel à l'intérieur dudit réservoir de stockage stratifié (100; 200).

2. Réservoir de stockage (100; 200) selon la revendication précédente, dans lequel lesdits moyens de stratification comprennent un couvercle inférieur (60) se présentant sous la forme d'un élément lamellaire disposé selon une configuration sensiblement horizontale dans ledit compartiment (V), de manière à séparer une partie inférieure (Pᵢ) dudit compartiment (V) d'une partie intermédiaire (Pₘ) dudit compartiment (V).

3. Réservoir de stockage (100; 200) selon la revendication précédente, dans lequel ledit couvercle inférieur (60) comprend un convoyeur (66) destiné à faire passer de l'eau technique chauffée de ladite partie inférieure (Pᵢ) vers une partie supérieure (Pₛ) dudit compartiment (V).

4. Réservoir de stockage (200) selon l'une quelconque des revendications précédentes, dans lequel lesdits moyens de stratification comprennent un couvercle intermédiaire (70) se présentant sous la forme d'un élément lamellaire disposé selon une configuration sensiblement horizontale dans ledit compartiment (V), de manière à séparer une partie intermédiaire (Pₘ) dudit compartiment (V) d'une partie supérieure (Pₛ) dudit compartiment (V).

5. Réservoir de stockage (200) selon la revendication précédente, dans lequel ledit couvercle intermédiaire (70) comprend au moins un convoyeur (77) destiné à faire passer de l'eau technique chauffée de ladite partie intermédiaire (Pₘ) vers une partie supérieure (Pₛ) dudit compartiment (V).

6. Réservoir de stockage (100; 200) selon l'une quelconque des revendications 2 à 5, dans lequel ledit couvercle (60; 70) présente des portions de surface inclinées permettant au fluide d'être acheminé vers une entrée dudit convoyeur (66, 77).

7. Réservoir de stockage (100; 200) selon l'une quelconque des revendications 2 à 6, dans lequel lesdits moyens de stratification comprennent au moins un élément de séparation latéral sensiblement vertical (68, 78), fixé audit couvercle (60, 70) et dimensionné pour définir un volume de stratification dans ledit compartiment (V).

8. Réservoir de stockage (100; 200) selon la revendication précédente, dans lequel ledit volume de stratification inférieur est dimensionné pour recevoir un serpentin (16) pouvant être raccordé à une installation solaire (600).

9. Réservoir de stockage (200) selon l'une quelconque des revendications 6 ou 7, dans lequel ledit volume de stratification intermédiaire est dimensionné pour recevoir un orifice de départ (27) pouvant être raccordé à un générateur de chaleur à température intermédiaire (700), éventuellement une pompe à chaleur.

10. Réservoir de stockage (100; 200) selon l'une quelconque des revendications précédentes, dans lequel ladite section oblongue présente une forme rectangulaire.

11. Système de distribution d'énergie thermique (1000; 2000) comprenant un générateur de chaleur à biomasse (500) et un réservoir de stockage stratifié (100; 200) selon l'une quelconque des revendications 1 à 10, dans lequel ledit générateur de chaleur à biomasse (500) et ledit réservoir de stockage (100; 200) sont conformés de manière à pouvoir être assemblés par emboîtement de formes.

12. Système de distribution d'énergie thermique (2000) selon la revendication précédente, comprenant un générateur de chaleur à température intermédiaire (700), éventuellement une pompe à chaleur.

13. Système de distribution d'énergie thermique (1000; 2000) selon l'une quelconque des revendications 11 ou 12, comprenant un générateur de chaleur à basse température (600), éventuellement une installation solaire.

14. Système de distribution d'énergie thermique (1000; 2000) selon l'une quelconque des revendications 11 à 13, comprenant:
- des premiers moyens de mesure de température destinés à mesurer une température interne dudit réservoir de stockage (100; 200), disposés à l'intérieur dudit réservoir de stockage (100; 200), et
- une unité de commande logique (CU) reliée auxdits premiers moyens de mesure de température et configurée pour
∘ acquérir la valeur de ladite température détectée par lesdits premiers moyens de mesure de température,
∘ comparer la valeur de ladite température à un seuil de température prédéterminé, et
∘ si ladite valeur de température est inférieure audit seuil de température prédéterminé, activer ledit générateur à biomasse (500) et/ou ledit générateur de chaleur à température intermédiaire (700).

15. Système de distribution d'énergie thermique (1000; 2000) selon la revendication précédente, comprenant des moyens de détection configurés pour détecter une ou plusieurs demandes thermiques de dispositifs utilisateurs raccordés au réservoir de stockage, dans lequel ladite unité de commande logique (CU) est reliée auxdits moyens de détection et configurée pour activer/désactiver ledit générateur à biomasse (500) et/ou ledit générateur de chaleur à température intermédiaire (700), en fonction de ladite ou desdites demandes thermiques détectées par lesdits moyens de détection, de manière à optimiser le rendement du système.

16. Système de distribution d'énergie thermique (1000; 2000) selon la revendication 14 ou 15, comprenant des deuxièmes moyens de mesure de température destinés à mesurer une température ambiante extérieure audit réservoir de stockage (100; 200), disposés à l'extérieur dudit réservoir de stockage (100; 200), dans lequel ladite unité de commande logique (CU) est reliée auxdits deuxièmes moyens de mesure de température et configurée pour acquérir la valeur de ladite température ambiante et pour activer/désactiver ledit générateur à biomasse (500) et/ou ledit générateur de chaleur à température intermédiaire (700), en fonction de ladite valeur, de manière à réguler une température de départ vers lesdits équipements en fonction de ladite valeur de température ambiante acquise.
